# EUROPÄISCHE PATENTANMELDUNG

(11) **EP 2 476 940 A2**
(43) Veröffentlichungstag der Anmeldung: **18.07.2012**
(21) Anmeldenummer: 12150781.8
(22) Anmeldetag: 11.01.2012
(51) Int. Cl.: F16L 33/22, F16L 37/138

(54) **Anschlussverbinder für Rohre**

(30) Priorität: 12.01.2011 DE 202011000061 U
(71) Anmelder: Beulco GmbH & Co. KG, 57439 Attendorn (DE)
(72) Erfinder: Pülmanns, Gerhard, 47918 Tönisvorst (DE)
(74) Vertreter: Haverkamp, Jens

(57) **Zusammenfassung**

Ein Anschlussverbinder 1 umfasst einen nach Art einer Hülse ausgebildeten Anschlussstutzen 3 als Teil eines Grundkörpers 2. Auf den Anschussstutzen 3 ist ein an den Anschlussverbinder 1 anzuschließendes Rohr- oder Schlauchende 18 aufsteckbar. Der Anschlussverbinder 1 verfügt mit dem Grundkörper 2 über eine Schiebehülse 9 zum Verklemmen des auf den Anschlussstutzen 3 aufgeschobenen Rohr- Schlauchendes 18 an dem Anschlussstutzen 3. Die Schiebehülse 9 weist an ihrer radialen Innenseite eine Klemmgliedkammer 10 auf. In dieser ist ein nach Art eines Sprengringes ausgeführter Klemmring 15 in axialer Richtung bewegbar gehalten. Die Kammer 10 ist in radialer Richtung nach außen durch eine in Richtung zum freien Ende des Anschlussstutzens 3 geneigte Stellschräge 12 begrenzt. An der Stellschräge 12 liegt der Klemmring 15 unter Vorspannung an und ist innerhalb der Klemmringkammer unter Verringerung seines Innendurchmessers von einer Montageposition in eine Klemmposition bewegbar. In der Klemmposition wirkt der Klemmring 15 gegen die Außenwand eines auf den Anschlussstutzen 3 aufgesteckten Rohres oder Schlauches bzw. ist in diese eingedrückt. Zudem ist eine Verrieglungseinrichtung zum formschlüssigen Verriegeln der Schiebehülse 9 entgegen ihrer Montagebewegung an den auf das Rohr- oder Schlauchende 18 wirkenden Klemmring 15 und/oder an dem Grundkörper vorgesehen.

## Beschreibung

Die Erfindung betrifft einen Anschlussverbinder, umfassend einen nach Art einer Hülse ausgebildeten Anschlussstutzen als Teil eines Grundkörpers, auf welchen Anschlussstutzen ein an dem Anschlussverbinder anzuschließendes Rohr- oder Schlauchende aufsteckbar ist, sowie eine Schiebehülse zum Verklemmen des auf den Anschlussstutzen aufgeschobenen Rohr- oder Schlauchendes an dem Anschlussstutzen.

Derartige Anschlussverbinder werden auch als Schiebehülsenverbinder bezeichnet und werden zum Anschließen von Kunststoffrohren eingesetzt, wobei es sich bei diesen Rohren auch um Mehrschichtverbundrohre handeln kann. Verwendet werden können derartige Anschlussverbinder ebenfalls zum Anschließen von Schläuchen. Ein Schiebehülsenanschlussverbinder verfügt über einen Grundkörper mit einem Anschlussstutzen, auf den das Kunststoffrohr aufzusetzen ist. Die äußere Mantelfläche des Anschlussstutzens trägt typischer Weise Rückhalteelemente, zumeist quer zur Längserstreckung des Anschlussstutzens verlaufende Rippen oder Wülste. Der Grundkörper selbst kann Teil einer beliebigen Armatur sein. Dieser Anschlussverbinder verfügt des Weiteren über eine Schiebehülse, die unter Zwischenschaltung des auf den Anschlussstutzen montierten Kunststoffrohrendes auf den Anschlussstutzen aufgeschoben wird. Die Hülse dient dem Zweck, das auf dem Anschlussstutzen befindliche Stück des Rohres gegenüber dem Anschlussstutzen zu verklemmen und durch die Verklemmung die Rückhaltelemente in die Innenseite des Rohres einzupressen und somit das Rohr diesbezüglich zu deformieren. Da hierfür hinreichend hohe Kräfte zum Aufschieben der sich im Wesentlichen über die gesamte Länge des Anschlussstutzens erstreckenden Schiebehülse notwendig sind, wird hierzu ein entsprechendes Werkzeug benutzt. Der Einsatz hydraulischer Werkzeuge ist zum Montieren von Schiebehülsen verbreitet.

Die Mantelfläche des Anschlussstutzens weist einen größeren Durchmesser auf als der Innendurchmesser des Rohres. Um ein Kunststoffrohr auf den Anschlussstutzen aufschieben zu können, muss dieses zuvor in seinem Endabschnitt geweitet werden. Hierfür ist ein weiteres Werkzeug von Nöten.

Infolge der vorbeschriebenen Montagetätigkeit wird diese auch als Schiebehülsentechnik angesprochen. Ein solcher nach der Schiebehülsentechnik arbeitender Anschlussverbinder mit den vorstehend beschriebenen Merkmalen ist beispielsweise aus DE 38 13 815 C2 oder auch aus DE 20 2008 008 554 U1 bekannt. Zum Sichern des auf dem Anschlussstutzen sitzenden Kunststoffrohrabschnitts an der darauf klemmend gehaltenen Schiebehülse wird in DE 20 2008 008 554 U1 vorgeschlagen, dass die Schiebehülse innenseitig eine nach innen abragende Rippe trägt, die nach vollendeter Montage in die Außenseite des Kunststoffrohres eingreifen soll. Erreicht werden soll durch diese Maßnahme eine Verriegelung der Schiebehülse an der Außenseite des auf dem Anschlussstutzen sitzenden Rohres. Eine Sicherung der Schiebehülse ist erwünscht, vor allem wegen auftretenden thermischen Belastungen und sich typischerweise daraus ergebenden, auf das Rohr wirkenden Zugbelastungen.

Bei dem aus DE 20 2008 008 554 U1 bekannt gewordenen Anschlussverbinder wird gemäß der Schiebehülsentechnik die Schiebehülse auf die Außenseite des auf dem Anschlussstutzen montierten Rohrendes zum Verklemmen desselben mittels eines an sich bekannten Werkzeuges aufgeschoben. Durch die nach innen abragende Verriegelungsrippe erfolgt zwar eine Verriegelung der Hülse in Schieberichtung, jedoch nur unzureichend in umgekehrter Richtung. Eine Sicherung soll jedoch gerade entgegen der Schiebebewegung der Schiebehülse erfolgen. Grund hierfür ist, dass bei dem Vorgang des Aufschiebens der Schiebehülse auf das aufgeweitete Rohrende durch die Verriegelungsrippe von der Außenseite des Rohres Material abgezogen wird, welches für die Zwecke des gewünschten Formschlusses in Schieberichtung der Hülse hinter der Rippe notwendig wäre.

Ausgehend von diesem diskutiertem Stand der Technik liegt der Erfindung daher die Aufgabe zugrunde, einen eingangs genannten Anschlussverbinder mit Schiebehülsentechnik dergestalt weiterzubilden, dass nicht nur eine wirksame Verriegelung zwischen der Hülse und der Außenseite des auf dem Anschlussstutzen befindlichen Rohrendes möglich ist, sondern dass zudem eine Verklemmung des Rohres an dem Anschlussstutzen hergestellt ist.

Gelöst wird diese Aufgabe erfindungsgemäß durch einen eingangs genannten, gattungsgemäßen Anschlussverbinder mit den Merkmalen des Anspruchs 1.

Bei diesem Anschlussverbinder wirkt im Unterschied zu vorbekannten Schiebehülsenverbindern nicht die Schiebehülse mit ihrer Innenseite unmittelbar auf das auf den Anschlussstutzen montierte Rohr- oder Schlauchende, sondern unter Zwischenschaltung zumindest eines von der Schiebehülse gehaltenen nach Art eines Sprengringes konzipierten Klemmgliedes. Dieser Klemmring ist innerhalb der Hülse in einer Klemmgliedkammer in längsaxialer Richtung derselben gegenüber der Hülse verschiebbar. Der Klemmring ist als offener Ring nach Art eines Sprengringes konzipiert, sodass dieser hinsichtlich seines Durchmessers änderbar ist. Die Schiebehülse trägt an ihrer Innenseite eine umlaufende oder zumindest weitgehend umlaufende Stellschräge, ausgerichtet in axialer Richtung, als radial äußere Begrenzung der Klemmgliedkammer. Eine Bewegung des Klemmringes entlang der Stellschräge von ihrem im Durchmesser größeren Ende in Richtung zu dem im Durchmesser kleineren Ende bewirkt sodann eine Durchmesserverringerung desselben. Die Schiebehülse mit ihrer Klemmgliedkammer und das Klemmglied sind derart hinsichtlich ihres Innendurchmessers aufeinander abgestimmt, dass die Schiebehülse ohne weiteres auf das noch nicht auf den Anschlussstutzen des Anschlussverbinders aufgesetzte Rohrende aufgeschoben werden kann, ohne dass das Klemmglied eine solche Montagetätigkeit behindert. Das Klemmglied befindet sich sodann in seiner Montageposition. Wird der Klemmring in axialer Richtung gegenüber der Stellschräge bewegt, was bei einer Montage der Schiebehülse auf den Grundkörper eintritt, verringert sich sein Durchmesser, so dass dieser gegen die äußere Mantelfläche des auf den Anschlussstutzen aufgesetzten Rohr- oder Schlauchendes wirkt und sich typischerweise in diese eingräbt. Der Anschlussstutzen, auf den das Rohr- oder Schlauchende aufgesetzt ist, dient hierbei als Widerlager, gegen das die Durchmesserverringerung des zumindest einen Klemmringes zum Deformieren der angrenzenden Außenseite des Rohr-oder Schlauchendes wirkt. Die über die Schiebehülse auf das Klemmglied und in die Mantelfläche des Rohr- oder Schlauchendes einwirkende Kraft ist auf die Kontaktfläche zwischen Klemmring und Mantelfläche des Rohr-oder Schlauchendes konzentriert. Damit unterscheidet sich diese Schiebehülse, bei der eine Kraftkonzentration auf einen Bruchteil der Längserstreckung der Schiebehülse bewirkt wird, von vorbekannten Schiebehülsen, bei denen die Schiebehülse mit ihrer gesamten Länge auf die Außenseite des Rohr- oder Schlauchendes wirkt. Folge der Kraftkonzentration auf die vorgenannte Kontaktfläche ist, dass sich der Klemmring bereits mit relativ geringen, auf die Schiebehülse wirkenden Kräften in die Mantelfläche des Rohr- oder Schlauchendes eindrücken lässt, sodass dieser formschlüssig in axialer Richtung an das Rohr oder den Schlauch angeschlossen ist.

Zum Realisieren dieses Konzeptes kommt es primär nicht auf die Querschnittsgeometrie des zumindest einen Klemmringes an. Gemäß einem Ausführungsbeispiel weist der Klemmring eine kreisrunde Querschnittsgeometrie auf. Gemäß einem anderen Ausführungsbeispiel ist die Querschnittsgeometrie des Klemmringes mehreckig, beispielsweise trapezförmig. Bei letztere Ausgestaltung verfügt der Klemmring an seiner nach au-Ben weisenden Seite über eine komplementäre Stellschräge, die an der innenseitigen Stellschräge der Schiebehülse anliegt. Zudem ist vorzugsweise vorgesehen, dass die innenseitige Mantelfläche eines solchen Klemmringes parallel oder zumindest in etwa parallel zu der Mantelfläche der Außenseite der Rohr- oder Schlauchendes verläuft. Unabhängig von der Querschnittsgeometrie des Klemmringes kann dieser an seiner nach innen in Richtung zu dem Anschlussstutzen des Grundkörpers weisenden Seite Verklammerungsstrukturen, beispielsweise Verklammerungswülste oder -rippen tragen, die in der Klemmposition des Klemmringes in die Au-Benseite eines aus dem Anschlussstutzen aufgeschobenen Rohr- oder Schlauchendes eingedrückt sind.

Um eine Verriegelung zwischen der Schiebehülse entgegen ihrer zu dem Grundkörper gerichteten Montagebewegung bereitzustellen, verfügt der Anschlussverbinder über eine Verriegelungseinrichtung. Durch diese ist die Schiebehülse in ihrer auf das Rohr- oder Schlauchende aufgeschobenen Stellung gegenüber dem Klemmring und/oder dem Grundkörper verriegelt. Bei der Alternative, bei der die Schiebehülse formschlüssig in längsaxialer Richtung durch den Klemmring gesichert ist, ist gemäß einer Ausgestaltung vorgesehen, dass der Stellschräge an derjenigen Position, an der der Klemmring bei bestimmungsgemäßer Montage der Schiebehülse angeordnet sein soll, eine sich zumindest über einen sich in Umfangsrichtung erstreckenden Abschnitt, vorzugsweise jedoch umfänglich erstreckende Riegelnut zugeordnet. In diese Riegelnut springt der Klemmring nach entsprechender Verschiebung innerhalb der Schiebehülse ein, sodass dieser dann einerseits mit seiner zu dem Rohr weisenden Seite in die Mantelfläche des Rohres oder des Schlauches und anderseits in die Riegelnut eingreift. Sodann ist der Klemmring formschlüssig sowohl an das Rohr als auch die Hülse angeschlossen. Ein Abziehen der Hülse oder ein Abziehen des Rohres von dem Anschlussverbinder ist zerstörungsfrei nicht möglich.

Gemäß einer anderen Ausgestaltung einer unlösbaren Verbindung der Schiebehülse in ihrer Klemmposition ist diese gegenüber dem Grundkörper verriegelt. Dieses erfolgt gemäß einer Ausgestaltung mittels eines nach Art eines Sprengringes ausgeführten Riegelkörpers, der in der Verriegelungsposition zum Teil in eine der Schiebehülse und zum anderen Teil in eine dem Grundkörper zugeordnete Riegelnut eingreift. Um den Riegelkörper in seine vorgeschriebene verriegelte Stellung zu bringen, ist gemäß einem Ausführungsbeispiel vorgesehen, dass die grundkörperseitige Riegelnut über einen gegenüber der Riegelnut tieferen und in mit dieser verbundenen Einsetzabschnitt verfügt. Dieser dient dem Zweck, dass der nach Art eines Sprengringes ausgeführte Riegelkörper, der typischerweise ein Sprengring ist, über eine die schiebehülsenseitige Riegelnut zu ihrem freien Ende hin begrenzenden Wulst herübergebracht werden kann.

Es versteht sich, dass die beiden vorbeschriebenen Möglichkeiten einer Verriegelung der Schiebehülse auch zusammen verwirklicht werden können, wodurch die Schiebehülse zum Einen mittels des zumindest einen Klemmringes an dem Rohr bzw. dem Schlauch und zum anderen an dem Grundkörper verriegelt ist. Dieses gewährleistet eine besonders wirksame Verriegelung.

Von Vorteil eines Anschlussverbinders mit der besonderen Verklemmung des Rohr- und Schlauchendes an dem Anschlussstutzen mittels zumindest eines Klemmringes ist nicht nur die besonders wirksame Verriegelung der Schiebehülse an dem montierten Rohrende und die effektive Krafteinleitung in die Mantelfläche des Rohres, sondern auch, dass die Hülse aufgrund der über den zumindest einen Klemmring konzentrierten Krafteinleitung über den Klemmring in die Mantelfläche des Rohr- oder Schlauchendes mittels eines relativ einfach konzipierten Werkzeuges aufgeschoben werden kann. Zudem wirkt sich positiv hinsichtlich der notwendigen Montagekraft aus, dass die zu überwindende Reibung gegenüber vorbekannten Schiebehülsenanschlussverbindern zwischen der Hülse und dem Rohr aufgrund der nur geringen Kontaktfläche zwischen dem Klemmring und dem Rohr nicht unerheblich reduziert ist. Daher kann eine solche Schiebehülse auch mit einem geeigneten manuellen Werkzeug aufgeschoben werden. Hydraulische Werkzeuge, wie diese zum Aufschieben der Schiebehülsen bei vorbekannten Schiebehülsenanschlussverbindern benötigt werden, brauchen bei dem Anschlussverbinder gemäß der Erfindung grundsätzlich nicht eingesetzt zu werden. Dieses ist ein nicht unwesentlicher Vorteil bei der Handhabung eines solchen Anschlussverbinders auf der Baustelle, beispielsweise in einer Baugrube.

In einer bevorzugten Ausgestaltung ist vorgesehen, dass in einer solchen Schiebehülse zwei oder mehr Klemmringe angeordnet sind, wobei jeder Klemmring in einer eigenen Klemmgliedkammer angeordnet ist. Die Klemmringe sind in axialer Richtung voneinander beabstandet. Jedem Klemmring ist eine eigene, ebenfalls in axialem Abstand zueinander angeordnete Stellschräge zugeordnet. Ist eine Verriegelung der Schiebehülse gegenüber dem Rohr- oder Schlauchende vorgesehen, wird es als ausreichend angesehen, wenn lediglich einer Stellschräge bzw. einem Klemmring eine Riegelnut, wie vorbeschrieben, zugeordnet ist. Bei einer Ausgestaltung eines Schiebehülsenanschlussverbinders mit beispielsweise mehreren Klemmringen ist es vorteilhaft wenn der näher zum Grundkörper befindlichen Stellschräge die Riegelnut zugeordnet ist. Ein anderer Klemmring befindet sich vorzugsweise an einer Position innerhalb der Schiebehülse, dass dieser unter Zwischenschaltung des Rohrendes auf den Endbereich des Anschlussstutzens als Widerlager wirkt. Aufgrund der auch bei dieser Ausgestaltung über den Klemmring auf das Rohr oder den Schlauch und somit auf den Endbereich des Anschlussstutzens wirkenden hohen ringförmigen Klemmkraft ist eine besonders sichere Abdichtung zwischen der Innenseite des Rohres oder des Schlauches und der Mantelfläche des Anschlussstutzens ausgebildet. Vorzugsweise wirkt dieser Klemmring auf den Anschlussstutzen noch vor einem ersten umlaufenden Rückhalteelement, etwa einem Wulst oder einer Rippe auf den Anschlussstutzen. Versuche haben gezeigt, dass selbst nach einem mehrhundertmaligen Temperaturlastwechsel aufgrund der wirksamen Verklemmung bereits am Anfang des Anschlussstutzens keinerlei Flüssigkeit durch diese erste Klemmstelle hindurch tritt. Für eine dauerhafte Abdichtung ist dieses wesentlich, da bereits geringste, in die zwischen den Rückhalterippen befindlichen Nuten eingedrungene Flüssigkeitsmengen zu einer allmählichen Weitung des Rohrinneren führen. Weitere Klemmringe können zwischen diesen beiden vorgesehen sein.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig.1:**: einen Halblängsschnitt nach Art einer Explosionsdarstellung durch einen Anschlussverbinder mit Schiebehülsentechnik,
- **Fig. 2:**: der Anschlussverbinder der Figur 1 mit dem daran angeschlossenen Rohrende in einer gegenüber Figur 1 vergrößerten Darstellung,
- **Fig. 3:**: einen Halblängsschnitt nach Art einer Explosionsdarstellung durch einen Anschlussverbinder mit Schiebehülsentechnik gemäß einer weiteren Ausgestaltung,
- **Fig. 4:**: der Anschlussverbinder der Figur 3 mit einem daran angeschlossenen Rohrende in einer gegenüber Figur 3 vergrößerten Darstellung und
- **Fig. 5:**: ein Halblängsschnitt nach Art einer Explosionsdarstellung durch einen Anschlussverbinder mit Schiebehülsentechnik gemäß noch einer weiteren Ausgestaltung,
- **Fig. 5a:**: die Schiebehülse der Figur 5 in montagefertigem Zustand,
- **Fig. 6:**: der Anschlussverbinder der Figur 5 mit einem daran angeschlossenen Rohrende in einer ersten Montagestellung der Schiebehülse und
- **Fig. 7:**: eine Darstellung entsprechend derjenigen der Figur 6 mit der aufgeschobenen und verriegelten Schiebehülse.

Ein nach der Schiebehülsentechnik konzipierter Anschlussverbinder 1 verfügt über einen Grundkörper 2, an dem ein Anschlussstutzen 3 angeformt ist. Der Anschlussstutzen 3 ist aufgrund seines zentralen Durchgangskanals, der ebenfalls den Grundkörper 2 durchgreift, nach Art einer Hülse konzipiert. Der Anschlussstutzen 3 trägt an seiner äußeren Mantelfläche mehrere umlaufende Rippen 4, denen der Zweck von Rückhalte- bzw. Verklammerungselementen zukommt. An den Grundkörper 2 ist des Weiteren ein konzentrisch zur Längsachse verlaufender Stellring 5 angeformt. Durch den Stellring 5 ist zusammen mit dem Anschlussstutzen 3 eine ringförmige Aufnahme 6 gebildet. Diese dient zur Aufnahme des freien Endes eines anzuschließenden Rohres. Die äußere Mantelfläche 7 des Stellringes 5 ist in Richtung zum freien Ende des Anschlussstutzens 3 geneigt. Diese äußere Mantelfläche 7 ist in Richtung zum Grundkörper 2 durch einen Verriegelungsabsatz 8 begrenzt.

Teil des Anschlussverbinders 1 ist des Weiteren eine Schiebehülse 9. Bei dem dargestellten Ausführungsbeispiel verfügt die Schiebehülse 9 über zwei Klemmringkammern 10, 10.1. Die Klemmringkammer 10 ist in Richtung zum Grundkörper 2 durch einen in radialer Richtung nach innen vorspringenden Absatz 11 begrenzt. An den Absatz 11 grenzt eine umlaufende Stellschräge 12, deren Neigung von dem Grundkörper 2 weg in Richtung zur Längsachse gerichtet ist. An die Stellschräge 12 grenzt eine umlaufende Riegelnut 13, durch die die lichte Weite der Schiebehülse 9 gegenüber der Verjüngung durch die Stellschräge 12 wieder etwas erweitert ist.

Die die Riegelnut 13 an der von der Stellschräge 12 abgewandten Seite begrenzende Wand trennt die Klemmringkammer 10 von der Klemmringkammer 10.1. Die Klemmringkammer 10.1 verfügt ebenfalls über eine Stellschräge 12.1, nicht jedoch über eine Riegelnut. Die Länge der beiden Klemmringkammern 10, 10.1 in axialer Richtung ist gleich. Der Innendurchmesser der Stellschräge 12 und der Stellschräge 12.1 an der Stelle ihrer größten Verjüngung ist ebenfalls gleich. Aus diesem Grunde ist der Neigungswinkel der Stellschräge 12 etwas größer als derjenige der Stellschräge 12.1. Die Klemmringkammer 10.1 ist rückwärtig durch einen in radialer Richtung nach innen vorspringenden Flansch 14 begrenzt.

Jeder Klemmringkammer 10 bzw. 10.1 der Schiebehülse 9 ist ein Klemmring 15, 15.1 zugeordnet. Bei den Klemmringen 15, 15.1 handelt es sich um Sprengringe, mithin um offene Ringe, die gegen ihre Rückstellkraft bezüglich ihres Durchmessers verkleinert werden können. Zwischen den beiden Klemmringen 15, 15.1 befindet sich eine Distanzhülse. Die Klemmringe 15, 15.1 sind in der jeweiligen Klemmringkammer 10 bzw. 10.1 gehalten, und zwar dadurch, dass diese unter einer gewissen Vorspannung stehend sich in einer Ausgangsstellung an der Stellschräge 12 bzw. 12.1 im Bereich mit ihrem größten Durchmesser abstützen. Mithin liegt der Klemmring 15 mit seiner radialen Außenseite an der Stellschräge 12 am Absatz 11 anliegend und der Klemmring 15.1 mit seiner Außenseite gegen die Stellschräge 12.1 wirkend und an der zu der Klemmringkammer 10 weisenden Wand an. Die Distanzhülse befindet sich zwischen den beiden Klemmringen 15, 15.1 und stößt an beide Klemmringe 15, 15.1.

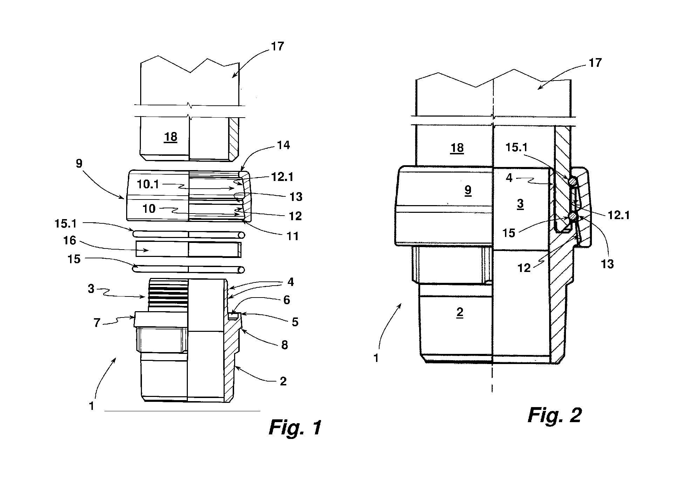

In Figur 1 ist des Weiteren das Ende eines Kunststoffrohres 17 gezeigt, welches an den Anschlussverbinder 1 anzuschließen ist. Das Rohrende des Rohres 17 trägt das Bezugszeichen 18.

Zum Anschließen des Rohres 17 bzw. des Rohrendes 18 an den Anschlussverbinder 1 wird zunächst die Schiebehülse 9 mit den darin befindlichen Klemmringen 15, 15.1 und der zwischen den Klemmringen 15, 15.1 befindlichen Distanzhülse 16 auf das Rohrende 18 aufgeschoben. Dabei versteht es sich, dass der Innendurchmesser der Klemmringe 15, 15.1 mit dem notwendigen Spiel zum Aufschieben der Schiebehülse 9 auf das Rohrende 18 größer ist als der Außendurchmesser des Rohrendes 18. In einem nächsten Schritt wird das Rohrende 18, falls erforderlich etwas aufgeweitet, auf den Anschlussstutzen 3 des Grundkörpers 2 aufgeschoben. Zum Verklemmen des auf den Anschlussstutzen 9 aufgesetzten Rohrendes 18 wird nunmehr die Schiebehülse 9 auf dem Rohrende 18 in Richtung zum Grundkörper 2 geschoben. Im Zuge dieser Bewegung greift der Stellring 5 in die Schiebehülse 9 ein. Mithin wird die Schiebehülse 9 mit ihrem zum Grundkörper 2 weisenden Ende über den Stellring 5 geschoben. Der Stellring 5 wird somit an den Klemmring 15 herangeführt und bietet diesem bei einem weiteren Aufschieben der Schiebehülse 9 auf den Grundkörper 2 ein Widerlager. Infolge dessen wird im Zuge der weiteren axialen Bewegung der Schiebehülse 9 zum Grundkörper 2 hin der Klemmring 15 entlang der Stellschräge 12 bewegt. Durch die zwischen den Klemmringen 15, 15.1 befindliche Distanzhülse 16 drückt der Klemmring 15 die Distanzhülse 16 und diese wiederum den Klemmring 15.1 in dieselbe Richtung, weshalb der Klemmring 15.1 gleichzeitig entlang der Stellschräge 12.1 bewegt wird. Durch Bewegen der Klemmringe 15, 15.1 an der jeweiligen Stellschräge 12 bzw. 12.1 wird deren Durchmesser verringert, sodass die über die Stellschrägen 12, 12.1 auf die Klemmringe 15, 15.1 aufgebrachte Klemmkraft auf die äußere Mantelfläche des Rohrendes 18 wirkt. Die Neigung der Stellschrägen 12, 12.1 und der Durchmesser der Klemmringe 15, 15.1 sind aufeinander abgestimmt, damit der Innendurchmesser der Klemmringe 15, 15.1 kleiner als der Außendurchmesser des Rohrendes 18 ist, wenn diese sich im Bereich ihrer jeweiligen Stellschräge 12 bzw. 12.1 mit dem verringerten Innendurchmesser befinden. Folglich haben die Klemmringe 15, 15.1, wenn durch Aufschieben der Schiebehülse 9 auf den Grundkörper 2 in diese Position gebracht, sich in die äußere Mantelfläche des Rohrendes 18 eingegraben und pressen das Rohrende 18 auf die auf dem Anschlussstutzen 3 befindlichen umlaufenden Rippen 4.

Der in der Klemmgliedkammer 10 befindliche Klemmring 15 ist bei vollständig auf den Grundkörper 2 aufgeschobener Schiebehülse 9 in die Riegelnut 13 eingeführt. Aufgrund seiner Federeigenschaften springt der Klemmring 15 in die Riegelnut 13 ein, wenn dieser von der Stellschräge herunterbewegt und die Stellschräge 12 verlassen hat. Ist der Klemmring 15 nicht hinreichend federelastisch, genügt grundsätzlich auch die Relaxation des Materials des Rohrendes 18, um den Klemmring in die Riegelnut 13 einzubringen. Zweckmäßigerweise greift der Klemmring 15 in die Riegelnut 13 ein und ist gleichzeitig in die äußere Mantelfläche des Rohrendes 18 eingegraben. Sodann ist durch den Klemmring 15 eine formschlüssige Verbindung zwischen der Schiebehülse 9 und dem Klemmring 15 einerseits und zwischen dem Klemmring 15 und dem Rohrende 18 andererseits herbeigeführt. Mithin ist die Schiebehülse 9 sodann selbstverriegelnd mit dem Rohrende 18 und somit an dem Grundkörper 2 unlösbar verbunden.

Figur 2 zeigt das an den Anschlussverbinder 1 montierte Rohrende 18 des Rohres 17. Erkennbar greift der Klemmring 15 in die Riegelnut 13 ein. Der Klemmring 15.1 ist dagegen nur in die äußere Mantelfläche des Rohrendes 18 eingedrückt. Figur 2 zeigt, dass der von dem Grundkörper 2 entferntere Klemmring 15.1 auf den Anschlussstutzen 3 bereits vor der ersten Rippe 4, vom freien Ende des Anschlussstutzens 3 aus gesehen, wirkt. Bei dem dargestellten Ausführungsbeispiel wirkt die über den Klemmring 15.1 induzierte Klemmkraft sowohl auf die Mantelfläche des Anschlussstutzens 3 als auch gegen die Rippe 4 als Widerlager.

Infolge der durch die Klemmringe 15, 15.1 aufgebrachten Klemmkraft haben sich die Rippen 4 in die innere Mantelfläche des Rohrendes 18 formschlüssig eingegraben.

Die Beschreibung des vorstehenden Ausführungsbeispiels macht deutlich, dass grundsätzlich eine formschlüssige Verriegelung zwischen der Schiebehülse 9 und dem Rohrende 18 auch dann erfolgt, wenn nur der äußere Klemmring 15.1 in die äußere Mantelfläche des Rohrendes 18 und der dem Grundkörper 2 nähere Klemmring 15 in die Riegelnut 13 eingreift. Eine Ausgestaltung, bei der beide Klemmringe in die Außenseite des Rohrendes eingreifen, ist jedoch bevorzugt.

Wenn gewünscht, kann zur weiteren Verriegelung der Absatz 11 der Schiebehülse 9 über den Verriegelungsabsatz 8 des Grundkörpers herumgezogen werden.

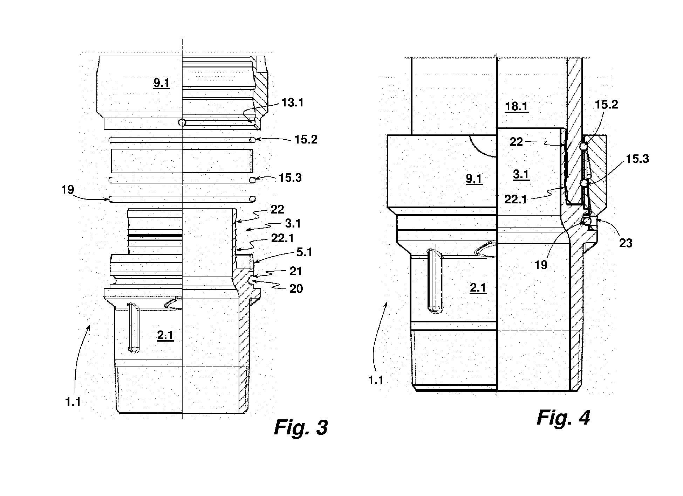

Figur 3 zeigt ein weiteres Ausführungsbeispiels eines Anschlussverbinders 1.1, der prinzipiell konzipiert ist wie der Anschlussverbinder 1 der Figuren 1 und 2, was die Verklemmung eines Rohr- oder Schlauchendes auf dem Anschlussstutzen 3.1 des Grundkörpers 2.1 betrifft. Daher gelten die diesbezüglichen Ausführungen zu dem Anschlussverbinder 1 ebenfalls für den Anschlussverbinder 1.1. Der Anschlussverbinder 1.1 unterscheidet sich von dem Anschlussverbinder 1 durch die Konzeption der Verriegelung seiner Schiebehülse 9.1 entgegen seiner auf den Grundköper 2.1 gerichteten Montagebewegung. Während bei dem Anschlussverbinder 1 die diesbezügliche Verriegelung der Schiebehülse 9 über den formschlüssig einerseits in die Außenseite des Rohres eingreifenden Klemmring 15, der ebenfalls formschlüssig in die Riegelnut 13 der Schiebehülse 9 eingreift, erfolgt, ist die Schiebehülse 9.1 bei dem Anschlussverbinder 1.1 gegenüber dem Grundköper 2.1 verriegelt. Als Riegelkörper dient bei dem Anschlussverbinder 1.1 ein Sprengring 19. Der Sprengring 19 sitzt vor der Montage der Schiebehülse 9.1 in einem Einsetzabschnitt 20 einer in den Grundkörper 2.1 eingebrachten und in radialer Richtung nach außen offenen Riegelnut 21. Diese befindet sich mit kurzem Abstand hinter dem Stellring 5.1. Der Einsetzabschnitt 20 ist gegenüber der Riegelnut 21 vertieft. Während die Tiefe der Riegelnut 21 kleiner ist als der Durchmesser des Sprengringes 19, ist die Tiefe des daran angrenzenden Einsetzabschnittes 20 tief genug, um den Sprengring 19 hinsichtlich seines Durchmessers aufnehmen zu können.

Die Schiebehülse 9.1 verfügt über eine Riegelnut 13.1. Diese befindet sich an dem zum Grundkörper 2.1 weisenden Endabschnitt der Schiebehülse 9.1. Die Tiefe der Riegelnut 13.1 ist ebenfalls kleiner als der Durchmesser des Sprengringes 19.

Der Anschlussstutzen 3.1 weist an seiner Außenseite zwei konkave muldenförmige Vertiefungen 22, 22.1 auf. Die Vertiefungen 22, 22.1 befinden sich in Bezug auf die Längsersteckung des Anschlussstutzens 3.1 an Positionen, an denen sich die beiden Klemmringe 15.2, 15.3 der Schiebehülse 9.1 befinden, wenn die Schiebehülse 9.1 mit dem Grundkörper 2.1 verbunden ist. Da die Klemmringe 15.2, 15.3 gegen die äußere Mantelfläche des anzuschließenden Rohr- oder Schlauchendes wirken und der Anschlussstutzen 3.1 das Widerlager hierzu bildet, wird bei dem Ausführungsbeispiel der Figur 3 das Rohr- oder Schlauchende durch die Klemmringe 15.2, 15.3 in die Vertiefungen 22 bzw. 22.1 eingedrückt.

Figur 4 zeigt ein auf den Anschlussstutzen 3.1 aufgestecktes Rohrende 18.1 mit der am Grundkörper 2.1 verriegelten Schiebehülse 9.1. Die beiden Klemmringe 15.2, 15.3 befinden sich in ihrer auf die Außenseite des Rohrendes 18.1 einwirkenden und sich darin eingrabenden Stellung. Erkennbar ist, dass durch diese radiale Krafteinwirkung das Rohrende 18 in die Vertiefungen 22, 22.1 eingedrückt wird. Dieses gewährleistet eine besondere Dichtigkeit des an den Anschlussverbinder 1.1 angeschlossenen Rohrendes 18.1. Der als Riegelkörper dienende Sprengring 19 greift zur Verriegelung der Schiebehülse 9.1 mit einem Teil seines Durchmessers in die der Schiebehülse 9.1 zugeordnete Riegelnut 13.1 und mit seinem anderen Teil in den Einsetzabschnitt 20 bzw. die Riegelnut 21 ein. Um für einen Monteur die bestimmungsgemäße Verriegelung der Schiebehülse 9.1 an dem Grundkörper 2.1 erkennbar zu machen, ist in die Schiebehülse 9.1 im Bereich ihrer Riegelnut 13.1 ein Fenster 23 eingebracht. Die Erstreckung des Fensters 23 in Längsersteckung ist geringfügig größer als der diesbezügliche Durchmesser des Sprengringes 19. Von außen kann somit kontrolliert werden, ob der Sprengring 19 bestimmungsgemäß in die Riegelnut 13.1 der Schiebehülse 9.1 eingebracht ist.

Die Ausgestaltung des Anschlussstutzens 3.1 des Anschlussverbinders 1.1 lässt sich gleichermaßen auf den Anschlussverbinder 1 anwenden.

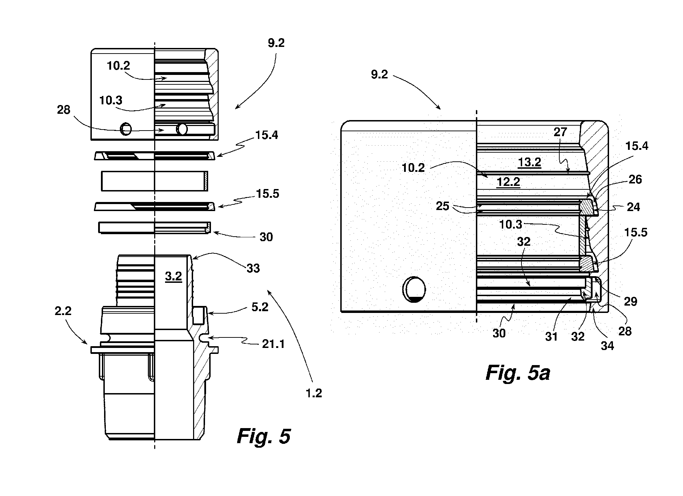

Figur 5 zeigt ein weiteres Ausführungsbeispiel eines Anschlussverbinders 1.2, der prinzipiell aufgebaut ist wie der Anschlussverbinder 1.1. Daher ist im Folgenden vornehmlich auf die Unterschiede des Anschlussverbinders 1.2 gegenüber dem Anschlussverbinder 1.1 eingegangen:

Der Anschlussverbinder 1.2 unterscheidet sich von dem Anschlussverbinder 1.1 zum einen durch die Ausgestaltung seiner auf das auf den Anschlussstutzen 3.2 aufgesetzte Rohr- und/oder Schlauchende wirkenden Klemmringe 15.4, 15.5. Beide Klemmringe 15.4 und 15.5 sind identisch aufgebaut. Im Folgenden ist der Klemmring 15.4 näher beschrieben. Der Klemmring 15.4 weist eine im Wesentlichen trapezförmige Querschnittsgeometrie auf. Seine in radialer Richtung nach außen weisende Mantelfläche ist in Richtung zu dem von dem Grundkörper 2.2 wegweisenden Ende konisch verjüngt. Mithin bildet die äußere Mantelfläche eine Stellschräge 24 auf. Die Neigung der Stellschräge 24 ist komplementär zu der Neigung der Stellschräge 12.2 der den Klemmring 15.4 aufnehmenden Klemmringkammer 10.2. Die nach innen weisende Seite des Klemmringes 15.4 trägt Verklammerungsstrukturen 25, die sich beim Festsetzen eines Rohr-und/oder Schlauchendes in die Außenseite desselben eindrücken. Mit seiner Stellschräge 24 liegt der Klemmring 15.4 flächig an der Stellschräge 12.2 der Schiebehülse 9.2 an. In der der Figur 5a gezeigten Montagestellung des Klemmringes 15.4, in welcher Stellung die Schiebehülse 9.2 montagefertig ist und auf das festzusetzende Rohr- oder Schlauchende aufgeschoben wird, befindet sich dieser in einer Montagekammer 26, deren Innendurchmesser größer ist als der Außendurchmesser des Klemmringes 15.4 in unbelastetem Zustand. Dieses gewährleistet ein notwendiges Spiel, damit der Klemmring 15.4 nach außen ausweichen kann, wenn der Rohrdurchmesser etwas größer ist als der Innendurchmesser desselben in unbelastetem Zustand. Die eigentliche Stellschräge 12.2 der Schiebehülse 9.2 beginnt am Ausgang der Montagekammer 26. Die Stellschräge 12.2 der Schiebehülse 9.2 grenzt an ihrem anderen Ende an eine Riegelnut 13.2, die dieselbe Neigung wie die Stellschräge 12.2 aufweist. Die Riegelnut 13.2 ist somit gegenüber dem verjüngten Ende der Stellschräge 12.2 zurückversetzt und bildet mit dem zur der Riegelnut 13.2 weisenden Ende der Stellschräge 12.2 einen Anschlagabsatz 27 aus. Der Anschlagabsatz 27 selbst erstreckt sich in radialer Richtung. Beim Verriegeln der Schiebehülse 9.2 mittels des Klemmringes 15.4 an der äußeren Mantelfläche eines auf den Anschlussstutzen 3.2 aufgesetzten Rohr- oder Schlauchendes springt der Klemmring 15.4 nach entsprechendem Aufschieben der Schiebehülse 9.2 in die Riegelnut 13.2 ein und liegt mit seiner zu dem Grundkörper 2.2 weisenden Stirnseite an dem Anschlagabsatz 27 an. Da die diese Fläche des Klemmringes 15.4 mit der Stellschräge 24 verbindende Kante einen sehr kleinen Radius aufweist, ist es zur wirksamen Verriegelung des Klemmringes 15.4 in der Regel ausreichend, wenn die Höhe des Anschlagabsatzes 27 nur ein Bruchteil eines Millimeters, etwa 0,1 oder 0,2 Millimeter beträgt.

Die Klemmringkammer 10.3, in der der zweite Klemmring 15.5 angeordnet ist, ist ebenso konzipiert und verfügt ebenfalls über eine gleichermaßen konzipierte Riegelnut, wie dieses bezüglich der Klemmringkammer 10.2 beschrieben ist.

Der Anschlussverbinder 1.2 unterscheidet sich von dem Anschlussverbinder 1.1 auch durch die Art der Verriegelung seiner Schiebhülse 9.2 am Grundkörper 2.2. Während bei dem Anschlussverbinder 1.1 ein Sprengring 19 zum formschlüssigen Verriegeln der Schiebehülse 9.1 an dem Grundkörper 2.1 von dem Grundkörper 2.1 getragen ist, ist dieses beim Gegenstand des Anschlussverbinders 1.2 anders. Die Schiebehülse 9.2 verfügt über eine Riegelkammer 28, die durch einen Stellflansch 29 von der in Bezug zu dem Grundkörper 2.2 nähern Klemmringkammer 10.3 getrennt ist. Die Riegelkammer 28 dient zur Aufnahme eines nach Art eines Sprengringes konzipierten Riegelringes 30. Der Riegelring 30 ist in der Riegelkammer 28 unverlierbar aufgenommen. Dabei sind der Stellflansch 29 in Bezug auf seine radiale Erstreckung nach innen und die zu dem Stellflansch 29 weisende Stirnfläche des Riegelringes 30 so aufeinander abgestimmt, dass der Riegelring 30 umlaufend wenigstens mit einem Abschnitt der radialen Erstreckung seiner Stirnfläche an der zu dem Riegelring 30 weisenden Oberfläche des Stellflansches 29 anliegt. Der Riegelring 30 verfügt an seiner zu dem Grundkörper 2.2 weisenden Innenseite über eine Zentrierschräge 31. An seiner wiederum zu dem Stellflansch 29 weisenden Seite trägt der Riegelring 30 einen wulstartig nach innen abragenden Absatz 32 mit einer zum Stellflansch 29 weisenden Anschlagfläche. Der Grundkörper 2.2 verfügt an seinem freien Ende über eine Fase 33, die komplementär zu der Zentrierschräge 31 des Riegelringes 30 ausgeführt ist. Ebenso wie der Anschlussverbinder 1.1 verfügt der Grundkörper 2.2 des Anschlussverbinders 1.2 über eine Riegelnut 21.1, in die zur Verriegelung der Schiebehülse 9.2 an dem Grundkörper 2.2 der Riegelring 30 einspringt.

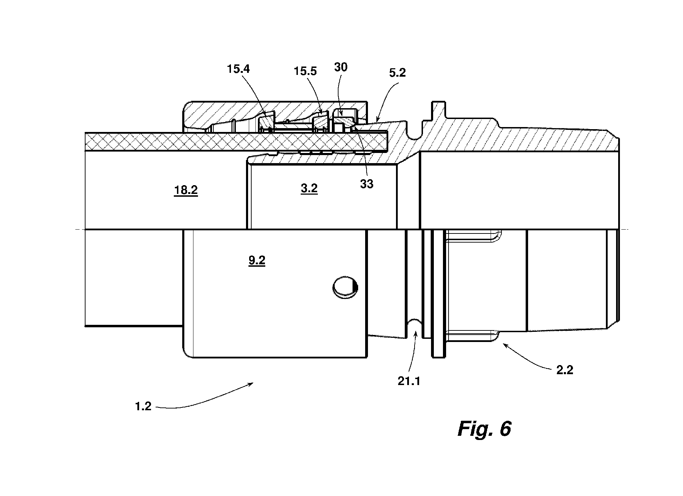

Figur 6 zeigt den Anschlussverbinder 1.2 mit seiner Schiebehülse 9.2 in einer Zwischenmontagestellung, bei der auf den Anschlusstutzen 3.2 bereits ein Rohrende 18.2 aufgeschoben ist. Die Schiebehülse 9.2 ist manuell in diese Montagestellung aufgeschoben worden. Durch weiteres Aufschieben der Schiebehülse 9.2 in Richtung zum Grundkörper 2.2 wird der Riegelring 30 an der Fase 33 des dem Grundkörper 2.2 zugeordneten Stellringes 5.2 aufgeweitet. Bei weiterem Aufschieben gelangt das freie Ende des Stellringes 5.2 an die zum Grundkörper 2.2 weisende Stirnseite des Klemmringes 15.4. In dieser Stellung der Schiebehülse 9. 2 in Bezug auf den Grundkörper 2.2 befinden sich die Klemmringe 15.4 und 15.5 jeweils an ihrer bestimmungsgemäßen Klemmposition in Bezug auf die äu-Bere Mantelfläche des Anschlussstutzens 3.2. Beim weiteren Aufschieben der Schiebehülse 9.2 werden die Klemmringe 15.4, 15.5 an den jeweiligen Stellschrägen unter Verringerung ihres Innendurchmessers gegen die Au-Benseite des Rohrendes 18.2 gedrückt, wobei sich die Verklammerungsstrukturen 25 in die Außenseite des Rohrendes 18.2 eindrücken und auf diese Weise eine formschlüssige Verbindung mit dem Rohrende 18.2 eingehen. Ist die Schiebehülse 9.2 weit genug aufgeschoben, springen die Klemmringe 15.4 und 15.5 in die jeweils an die Stellschrägen 12.2 grenzenden Riegelnuten 13.2 ein, wodurch die Schiebehülse 9.2 formflüssig an das Rohrende 18.2 angeschlossen und die Schiebehülse 9.2 gegen ein Abziehen verriegelt ist.

Im Zuge der vorbeschriebenen Bewegung ist auch der Riegelring 30 über die Außenseite des Stellringes 5.2 hinwegbewegt worden und greift mit seinem Absatz 32 in die Riegelnut 21.1 des Grundkörpers 2.2 ein. Dabei dient die zu der Klemmringkammer 10.3 der Schiebehülse 9.2 weisende Fläche des Absatzes 32 des Riegelringes 30 als umlaufende Riegelfläche, die gegen die zum Anschlussstutzen 3.2 weisende Wand der Riegelnut 21.1 wirkt.

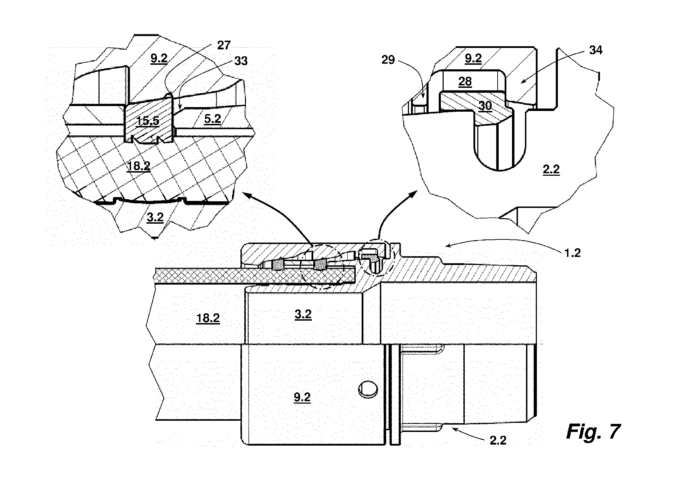

Die Riegelkammer 28 trägt vorderseitig einen Abschlussflansch 34, der über die zum Grundkörper 2.2 weisende Stirnseite des Riegelringes 30 ragt. Aus diesem Grunde wird bei einer Beanspruchung der Rohrverbindung entgegen der Montagebewegung, etwa bei einer ersten Druckbeaufschlagung - einem so genannten Abdrücken - der Riegelring 30 in seine in Figur 7 gezeigte Anschlaganordnung gebracht. Damit ist die Schiebehülse 9.2 auch durch den Riegelring 30 sicher an dem Grundkörper 2.2 verriegelt.

Bei dem beschriebenen Ausführungsbeispielen des Anschlussverbinders 1.2 ist die Schiebehülse durch zwei unterschiedliche Maßnahmen gegen ein Abziehen verriegelt. Es versteht sich, dass eine Verriegelung der Schiebehülse auch nur mit einer der beiden Maßnahmen möglich ist.

Die Beschreibung der Ausführungsbeispiele verdeutlicht, dass sich ein solcher Anschlussverbinder grundsätzlich auch nur mit einer Klemmgliedkammer und einem einzigen Klemmring verwirklichen lässt, ebenso wie eine Ausgestaltung, bei der mehr als zwei Klemmringkammern und einer dementsprechend größeren Klemmringanzahl vorgesehen ist.

Ohne den Umfang der geltenden Ansprüche zu verlassen, ergeben sich für einen Fachmann zahlreiche weitere Ausgestaltungen, die Erfindung verwirklichen zu können, ohne dass diese im einzelnen beschrieben werden müssten. Gleichwohl zählen diese Ausgestaltungen ebenfalls zum Offenbarungsgehalt dieser Unterlagen.

### Bezugszeichenliste

- 1, 1.1, 1.2: Anschlussverbinder
- 2, 2.1, 2.2: Grundkörper
- 3, 3.1, 3.2: Anschlussstutzen
- 4: Rippe
- 5, 5.1, 5.2: Stellring
- 6: Aufnahme
- 7: Mantelfläche
- 8: Verriegelungsabsatz
- 9, 9.1, 9.2: Schiebehülse
- 10, 10.1, 10.2, 10.3: Klemmringkammer
- 11: Absatz
- 12, 12.1, 12.2: Stellschräge
- 13, 13.1, 13.2: Riegelnut
- 14: Flansch
- 15, 15.1, 15.2, 15.3, 15.4, 15.5: Klemmring
- 16: Distanzhülse
- 17: Kunststoffrohr
- 18, 18.1, 18.2: Rohrende
- 19: Sprengring
- 20: Einsetzabschnitt
- 21, 21.1: Riegelnut
- 22, 22.1: Vertiefung
- 23: Fenster
- 24: Stellschräge
- 25: Verklammerungsstruktur
- 26: Montagekammer
- 27: Anschlagabsatz
- 28: Riegelkammer
- 29: Stellflansch
- 30: Riegelring
- 31: Zentrierschräge
- 32: Absatz
- 33: Fase
- 34: Abschlussflansch

## Patentansprüche

1. Anschlussverbinder umfassend einen nach Art einer Hülse ausgebildeten Anschlussstutzen (3, 3.1) als Teil eines Grundkörpers (2, 2.1, 2.2), auf welchen Anschlussstutzen (3, 3.1, 3.2) ein an dem Anschlussverbinder (1, 1.1, 1.2) anzuschließendes Rohr- oder Schlauchende (18, 18.1, 18.2) aufsteckbar ist, sowie eine Schiebehülse (9, 9.1, 9.2) zum Verklemmen des auf den Anschlussstutzen (3, 3.1, 3.2) aufgeschobenen Rohr- oder Schlauchendes (18, 18.1, 18.2) an dem Anschlussstutzen (3, 3.1, 3.2), **dadurch gekennzeichnet, dass** die Schiebehülse (9, 9.1, 9.2) an ihrer radialen Innenseite eine Klemmgliedkammer (10, 10.1, 10.2, 10.3) aufweist, in der ein nach Art eines Sprengringes ausgeführter Klemmring (15, 15.1; 15.2, 15.3, 15.4, 15.5) in axialer Richtung bewegbar gehalten ist, welche Kammer (10, 10.1, 10.2, 10.3) in radialer Richtung nach außen durch eine in Richtung zum freien Ende des Anschlussstutzens (3, 3.1, 3.2) geneigte Stellschräge (12, 12.1, 12.2) begrenzt ist, an welcher Stellschräge (12, 12.1, 12.2) der Klemmring (15, 15.1; 15.2, 15.3, 15.4, 15.5) anliegend unter Verringerung seines Innendurchmessers von einer Montageposition innerhalb der Klemmgliedkammer (10, 10.1, 10.2, 10.3) in eine Klemmposition bewegbar ist, in der der Klemmring (15, 15.1; 15.2, 15.3, 15.4, 15.5) gegen die Außenwand eines auf den Anschlussstutzen (3, 3.1, 3.2) aufgesteckten Rohres oder Schlauches wirkt bzw. in diese eingedrückt wird, und dass eine Verriegelungseinrichtung zum formschlüssigen Verriegeln der Schiebehülse (9, 9.1, 9.2) entgegen ihrer Montagebewegung an dem auf das Rohr- oder Schlauchende (18, 18.1, 18.2) wirkenden Klemmring (15, 15.3, 15.4, 15.5) und/oder an dem Grundkörper (2.1, 2.2) vorgesehen ist.

2. Anschlussverbinder nach Anspruch 1, **dadurch gekennzeichnet, dass** die Schiebehülse (9, 9.1, 9.2) zwei oder mehr, in axialer Richtung voneinander beabstandete, jeweils eine in dieselbe Richtung geneigte Stellschrägen (12, 12.1, 12.2) aufweisende Klemmgliedkammern (10, 10.1, 10.2, 10.3) mit je einem darin angeordneten Klemmring (15, 15.1; 15.2, 15.3, 15.4, 15.5) aufweist.

3. Anschlussverbinder nach Anspruch 2, **dadurch gekennzeichnet, dass** zwischen jeweils zwei benachbarten Klemmringen (15, 15.1; 15.2, 15.3) eine Distanzhülse (16) angeordnet ist.

4. Anschlussverbinder nach einem der Ansprüche 1 bis 3, **dadurch gekennzeichnet, dass** benachbart zu einer Stellschräge (12, 12.2) an ihrem im Durchmesser kleineren Ende eine Riegelnut (13, 13.2) angeordnet ist, in die der an der Stellschräge (12) sich abstützende Klemmring (15, 15.4, 15.5) zum formschlüssigen Sichern der Schiebehülse (9, 9.2) einspringt.

5. Anschlussverbinder nach Anspruch 4, **dadurch gekennzeichnet, dass** die Riegelnut (13, 13.2) unmittelbar an die benachbarte Stellschräge (12, 12.2) an ihrem im Durchmesser kleinerem Ende grenzt.

6. Anschlussverbinder nach Anspruch 4 oder 5, **dadurch gekennzeichnet, dass** nur der dem Grundkörper (2) näheren Klemmgliedkammer (10) eine Riegelnut (13) zugeordnet ist.

7. Anschlussverbinder nach einem der Ansprüche 1 bis 6, **dadurch gekennzeichnet, dass** der zumindest eine Klemmring (15, 15.1; 15.2, 15.3) eine kreisförmige Querschnittsfläche aufweist.

8. Anschlussverbinder nach einem der Ansprüche 1 bis 6, **dadurch gekennzeichnet, dass** der zumindest eine Klemmring (15.4, 15.5) eine zu der Stellschräge (12.2) der Klemmgliedkammer (10.2, 10.3) der Schiebehülse (9.2) komplementäre äußere Mantelfläche als Stellschräge (24) aufweist.

9. Anschlussverbinder nach Anspruch 8, **dadurch gekennzeichnet, dass** die Querschnittsgeometrie des zumindest einen Klemmringes trapezförmig oder im wesentlichen trapezförmig ist, wobei die Innenseite des Klemmringes (15.4, 15.5) ein oder mehrere Verklammerungselemente (25) trägt und die Mantelfläche der Innenseite des Klemmringes (15.4, 15.5) eine zumindest in etwa parallel mit der Mantelfläche eines auf den Anschlussstutzen (3.2) aufgeschobenen Rohr- oder Schlauchendes (18.2) verläuft.

10. Anschlussverbinder nach einem der Ansprüche 1 bis 9, **dadurch gekennzeichnet, dass** der Anschlussverbinder (1.1, 1.2) über eine Verriegelungseinrichtung zum Verriegeln der Schiebehülse an dem Grundkörper (2.1, 2.2) verfügt.

11. Anschlussverbinder nach Anspruch 10, **dadurch gekennzeichnet, dass** die Schiebehülse (9.1) einen Verriegelungsabschnitt mit einer umlaufenden, zum Grundkörper (2.1) hin offenen Riegelnut (13.1) zur Aufnahme eines Teils eines ringförmigen, nach Art eines Sprengringes ausgeführten Riegelkörpers (19) und der Grundkörper (2.1) eine komplementäre Riegelnut (21) zur Aufnahme eines weiteren Teils des Riegelkörpers (19) aufweist, wobei die grundkörperseitige Riegelnut (21) über einen gegenüber der Riegelnut (21) tieferen und in diese übergehenden Einsetzabschnitt (20) verfügt.

12. Anschlussverbinder nach einem der Ansprüche 1 bis 11, **dadurch gekennzeichnet, dass** der Grundkörper (2, 2.1, 2.2) über einen in die Klemmgliedkammer (10, 10.3) der Schiebehülse (9, 9.1, 9.2) eingreifenden ringförmigen Stellring (5, 5.1, 5.2) als Widerlager zum Bewegen eines Klemmringes (15, 15.3, 15.5) innerhalb der Klemmringkammer (10, 10.3) entlang der Stellschräge (12) beim Aufschieben der Schiebehülse (9, 9.1, 9.2) auf das auf dem Anschlussstutzen (3, 3.1, 3.2) befindliche Rohr- oder Schlauchende (18, 18.1, 18.2) verfügt.

13. Anschlussverbinder nach einem der Ansprüche 2 bis 12, **dadurch gekennzeichnet, dass** der Anschlussstutzen (3) außenseitig über mehrere umlaufende Rückhaltestrukturen (4) verfügt und der vom Grundkörper (2) des Anschlussverbinders (1) entferntere Klemmring (15.1) in seiner Verriegelungsposition vor der ersten Rückhaltestruktur (4) unter Zwischenschaltung des auf dem Anschlussstutzen (3) befindlichen Rohr- oder Schlauchendes (18) auf den Anschlussstutzen (3) als Widerlager wirkt.

14. Anschlussverbinder nach einem der Ansprüche 1 bis 13, **dadurch gekennzeichnet, dass** der Anschlussstutzen (3.1) über eine der Anzahl der Klemmringe (15.2, 15.3) entsprechende Anzahl an umlaufenden, konkav geformten Vertiefungen (22, 22.1) aufweist, wobei diese Vertiefungen (22, 22.1) mit ihren Scheiteln in Bezug auf die Längserstreckung des Anschlussstutzen (3,1) sich an derjenigen oder denjenigen Positionen befinden, die denjenigen des oder der Klemmringe (15.2, 15.3) der Schiebehülse (9.1) entsprechen, wenn diese sich in ihrer das Rohr verklemmenden Position befinden.
